# EUROPEAN PATENT APPLICATION

(11) **EP 4 302 919 A1**
(43) Date of publication of application: **10.01.2024**
(21) Application number: 23184410.1
(22) Date of filing: 10.07.2023
(51) Int. Cl.: B23K 35/02, B23K 35/30, B21C 47/02, B21C 47/12, B23K 35/40, B23K 9/04

(54) **WELDING WIRE**

(30) Priority: 08.07.2022 JP 2022110142; 23.03.2023 JP 2023046594
(71) Applicant: Daido Steel Co., Ltd., Nagoya-shi Aichi 461-8581 (JP)
(72) Inventor: KONDO, Ryosuke, Nagoya-shi, Aichi, 457-8545 (JP); OSAKI, Mototsugu, Minato-ku, Tokyo, 108-8478 (JP); YAMASHITA, Masakazu, Nagoya-shi, Aichi, 457-8545 (JP); NAKAMURA, Hironori, Nagoya-shi, Aichi, 457-8545 (JP)
(74) Representative: Diehl & Partner

(57) **Abstract**

The present invention relates to a welding wire including a solid wire of metal that has a tensile strength of 800 MPa or more, in which the welding wire has a cast of 300 mm or more and a helix of 20.0 mm or less. The welding wire may include a coating layer including Cu or a Cu alloy on an outer periphery of the solid wire.

## Description

### TECHNICAL FIELD

The present invention relates to a welding wire, and more particularly, to a welding wire configured as a solid wire and used for arc welding or the like.

### BACKGROUND ART

In a welding method such as gas-shielded arc welding and in an additive manufacturing method to which the above welding method is applied, a solid wire is widely used as a welding material. In the case of using a solid wire, a wire habit occurring at the time of winding up the wire in a coil shape may become a problem in a welding step. For example, a positional accuracy of the welding tends to be low due to the influence of the wire habit. In the case where welding is performed while feeding a solid wire having a wire habit, wear is more likely to occur in a member that comes into contact with the wire, such as a welding tip at a tip of a welding torch, due to friction and fusion with the wire. In the case where the wear of the welding tip significantly progresses due to welding or the like for a long period of time, an inner diameter of the welding tip may vary, and welding conditions may become unstable. In particular, since the welding time becomes long in the case where additive manufacturing is performed, the influence of the wear of the member such as a welding tip is likely to increase. In addition, in a case of performing wire feeding control welding in which welding is performed while repeating forward feeding and backward feeding during feeding the wire, the wear of the member such as a welding tip is also likely to occur.

There is a case where correction of the wire habit is performed as a countermeasure for reducing the above influence of the wire habit of the solid wire. In Patent Literature 1, a component composition and a material structure of a solid wire are studied from the viewpoint of ease of correction. In addition, as a method different from the correction, a coating layer represented by a Cu plating layer is formed on a surface of a solid wire to improve the feeding performance of the wire, as disclosed in Patent Literature 2.
Patent Literature 1: JP2017-164760A
Patent Literature 2: JP2019-882A

### SUMMARY OF INVENTION

As disclosed in Patent Literatures 1 and 2 and the like, a plurality of methods are used to reduce the influence of the wire habit of the solid wire during welding. However, a solid wire having a predetermined component composition and a predetermined material structure is used in Patent Literature 1, and soft steel is exclusively used as a core wire in Patent Literature 2, both of which do not disclose a method that can be applied as it is to various solid wires in order to reduce the influence of the wire habit. Actually, it is desired to use various metal materials as a welding material, and there is a large demand for using a solid wire including a high-strength material such as a Ni-based superalloy for welding. In the case where such a high-strength solid wire is used, a strong wire habit is formed, and the influence of the wire habit at the time of welding is likely to increase. In particular, in the case where a solid wire is used in a step in which high accuracy is required for a welding position or a manufacturing shape, such as welding to a thin plate, welding in the case where there is undulation, bending, or the like in a welded portion, additive manufacturing, or the like, the influence of the wire habit is likely to become a problem. Therefore, there is a need for a method capable of effectively reducing the influence of the wire habit even for a high-strength solid wire.

An object of the present invention is to provide a welding wire including a high-strength material and that can reduce the influence of the wire habit in welding to be small.

In order to solve the above-mentioned problems, the welding wire according to the present invention relates to the following configurations.
[1] A welding wire including a solid wire of metal that has a tensile strength of 800 MPa or more, in which the welding wire has a cast of 300 mm or more and a helix of 20.0 mm or less.
[2] In the aspect of [1], a coating layer may include Cu or a Cu alloy on an outer periphery of the solid wire.
[3] In the aspect of [1] or [2], the solid wire may be formed of a Ni-based alloy, a stainless steel, or a tool steel.
[4] In any one aspect of [1] to [3], the welding wire may have a wire diameter of 0.4 mm or more and 4.2 mm or less.
[5] In any one aspect of [1] to [4], during feeding of the welding wire in a feeding direction via a welding torch, a deviation amount of a position through which a center of a tip of the welding wire passes may be less than ±3 mm in both of two directions orthogonal to each other set in a plane orthogonal to the feeding direction.

In the welding wire according to [1] of the present invention, the cast is 300 mm or more and the helix is 20.0 mm or less, and even being wound up in a spiral shape, the spiral shape is easily eliminated. Therefore, while having a high strength of a tensile strength of 800 MPa or more, a wire habit is less likely to occur. Alternatively, even when a wire habit occurs, the wire habit is easily eliminated. By using such a welding wire for welding, the influence of the wire habit hardly occurs in welding. For example, the positional accuracy of the welding is excellent, and the wear of a member such as a welding tip in contact with the welding wire is reduced to be small.

In the aspect [2], a coating layer including Cu or a Cu alloy is provided on an outer periphery of the solid wire. The coating layer serves to improve the feeding performance of the welding wire and to improve the effect of reducing the wear of a member such as a welding tip during feeding of the welding wire.

In the aspect [3], the solid wire is formed of a Ni-based alloy, a stainless steel, or a tool steel. A Ni-based alloy, a stainless steel, and a tool steel are highly demanded as welding materials in additive manufacturing or the like. These materials have a high strength, and as compared with a material having a low strength such as soft steel, the wire habit is likely to become a problem in the welding step, but as described above, the wire has a predetermined cast and a predetermined helix, so that the influence of the wire habit in welding can be reduced to be small.

In the aspect [4], a wire diameter of the welding wire is 0.4 mm or more and 4.2 mm or less. Thus, the welding wire is excellent in welding efficiency, and is also excellent in the effect of reducing the influence of the wire habit.

In the above aspect [5], during feeding of the welding wire via a welding torch, a deviation amount of a position through which a center of the tip of the welding wire passes is less than ±3 mm in both of two directions orthogonal to each other set in a plane orthogonal to a feeding direction. In the welding wire according to the present invention, a wire habit is less likely to occur, and even when a wire habit occurs, the wire habit is more likely to be eliminated. Therefore, the deviation amount of the position of the tip of the welding wire may be thus reduced to be small at the time of feeding the welding wire via the welding torch. The positional deviation of the tip of the welding wire end is reduced to be small, so that the welding wire according to the present invention can be suitably used for an application requiring high positional accuracy, such as welding to a thin plate, welding in the case where there is undulation or bending in a welded portion, and additive manufacturing.

### BRIEF DESCRIPTION OF DRAWINGS

FIG. 1 is a view explaining a method for measuring a cast and a helix of a welding wire;
FIG. 2A and FIG. 2B are cross-sectional views schematically illustrating a relationship between the welding wire and a welding tip, FIG. 2A illustrates a case where the welding wire does not have a wire habit, and FIG. 2B illustrates a case where the welding wire has a wire habit;
FIG. 3A and FIG. 3B are diagrams schematically illustrating a step of winding up the welding wire around a spool as viewed from above, FIG. 3A illustrates a form in which the welding wire is wound up while sliding the spool and a roller, and FIG. 3B illustrates a form in which the welding wire is wound while positions of the spool and the roller are fixed.

### DESCRIPTION OF EMBODIMENTS

Hereinafter, a welding wire according to an embodiment of the present invention will be described in detail.

### [Overview of Welding Wire]

The welding wire according to the embodiment of the present invention is used as a welding material, particularly a welding material for performing gas-shield welding such as Metal Inert Gas (MIG) Welding or Metal Active Gas (MAG) Welding. The welding wire can also be suitably used for additive manufacturing using such a welding method. The welding wire is continuously fed from a feeding device to a welding torch and is used for welding.

The welding wire according to the present embodiment is configured as a solid wire. That is, the welding wire is configured as a solid metal wire. The welding wire may be formed of a single solid wire or include a coating layer including another metal on a surface of a solid wire serving as a core wire.

The welding wire according to the present embodiment has a tensile strength of 800 MPa or more. The tensile strength is preferably 900 MPa or more, more preferably 950 MPa or more. The tensile strength of the welding wire can be evaluated by a tensile test or the like in accordance with JIS Z 2241:2011. Further, the welding wire according to the present embodiment has predetermined properties defined by the cast and the helix as described in detail later. Even in the case where the welding wire has a structure in which a plurality of materials is compounded, such as a structure in which a coating layer is formed on the surface of the solid wire, various characteristics such as tensile strength indicate characteristics of the entire welding wire unless otherwise specified in the present description.

A specific material type of the solid wire constituting the welding wire is not particularly limited as long as the solid wire has the above tensile strength, but a Ni-based alloy can be suitably exemplified. In particular, a so-called Ni-based superalloy is suitable. In addition, as another suitable material type, a stainless steel (SUS) can be exemplified. In particular, a two-phase SUS, which is a SUS containing both an austenite phase and a ferrite phase, can be suitably used. In addition, a tool steel can be exemplified as still another suitable material. The Ni-based alloy, the stainless steel, and the tool steel are highly demanded as materials used for welding such as in additive manufacturing.

Specific examples of a component composition of each metal type exemplified above include those containing each component element in the following content range. The unit of the content is mass%. In addition, a component element for which a lower limit of the content is not indicated includes a case where the component element is not contained.

Ni-based alloy: C ≤ 0.5%, 0.1% ≤ Si ≤ 3.0%, 0.05% ≤ Mn ≤ 4.0%, P ≤ 0.04%, S ≤ 0.05%, 30.0% ≤ Ni, 0.05% ≤ Cu ≤ 32.0%, 0.5% ≤ Cr ≤ 46.0%, 0.1% ≤ Fe ≤ 30.0%, 0.1% ≤ Mo ≤ 32.0%, Co ≤ 15.00%, Al ≤ 5.0%, Ti ≤ 3.5%, Nb ≤ 5.5%, W ≤ 5.0%.

SUS (also including a case of two-phase SUS): C ≤ 0.4%, Si ≤ 1.0%, 0.1% ≤ Mn ≤ 4.8%, P ≤ 0.03%, S ≤ 0.03%, 0.1% ≤ Ni ≤ 37.0%, Cu ≤ 4.0%, 10.5% ≤ Cr ≤ 32.0%, 0.1% ≤ Mo ≤ 5.2%, Al ≤ 1.7%, Ti ≤ 1.2%, Nb ≤ 1.5%, N ≤ 0.50%, balance: Fe.

Tool steel: 0.15% ≤ C ≤ 2.5%, 0.01% ≤ Si ≤ 1.5%, 0.01% ≤ Mn ≤ 1.5%, P ≤ 0.03%, S ≤ 0.03%, 0.05% ≤ Ni ≤ 4.5%, Cu ≤ 1.0%, 0.05% ≤ Cr ≤ 15.0%, Mo ≤ 3.3%, Co ≤ 5.0%, V ≤ 2.5%, W ≤ 10.0%, balance: Fe.

The solid wire preferably includes a layer including Cu, a Cu-based alloy or a Cu alloy, particularly Cu, as the coating layer provided on the surface. The coating layer including Cu, a Cu-based alloy or a Cu alloy (hereinafter, simply referred to as a Cu coating layer in some cases) serves to improve the feeding performance of the welding wire, to prevent the welding wire from being caught on constituent members, such as the welding tip at the tip of the welding torch, of a welding device, and to prevent the wear of the device constituent member due to the contact with the welding wire. The Cu coating layer may be directly formed on the surface of the solid wire, but it is preferable to form a base layer including Ni or a Ni alloy on the surface of the solid wire and then form the Cu coating layer on a surface of the base layer. The base layer improves adhesion of the Cu coating layer to the solid wire, and stabilizes the Cu coating layer. The base layer and the Cu coating layer can be preferably formed by plating the surface of the solid wire. After forming the layers, the adhesion of the Cu coating layer can be further improved by drawing the wire. A thickness of the Cu coating layer is not particularly limited, but is preferably 0.1 µm or more from the viewpoint of sufficiently exerting the effect of improving the feeding performance. On the other hand, the thickness of the Cu coating layer may be 3.0 µm or less from the viewpoint of avoiding the influence on the component composition of the welding wire. A thickness of the base layer may be set to be substantially the same as that of the coating layer.

A wire diameter of the welding wire is not particularly limited, but is preferably 0.4 mm or more, more preferably 1.0 mm or more. Thus, handleability of the welding wire can be improved, and welding can be performed with high efficiency. On the other hand, the wire diameter of the welding wire is preferably 4.0 mm or less, more preferably 2.0 mm or less. Thus, the effect of reducing the influence of the wire habit of the welding wire to be described later is particularly excellent.

The welding wire may be used for welding in any form. That is, the welding wire may be used for welding while being kept in a linear shape, or while having a bend in the middle, such as a spirally wound form for convenience of storage, conveyance, and the like. Preferably, the welding wire is spirally wound up using a spool or the like. In addition, in the case where the welding wire has a bend in the middle, the welding wire may be used after being corrected into a linear shape, or may be used as it is without being corrected. However, as described later, in the welding wire according to the present embodiment, the influence of the wire habit is reduced to be small, and from the viewpoint of step simplification, it is preferable to use the welding wire as the welding material without performing correction.

### [Properties of Welding Wire]

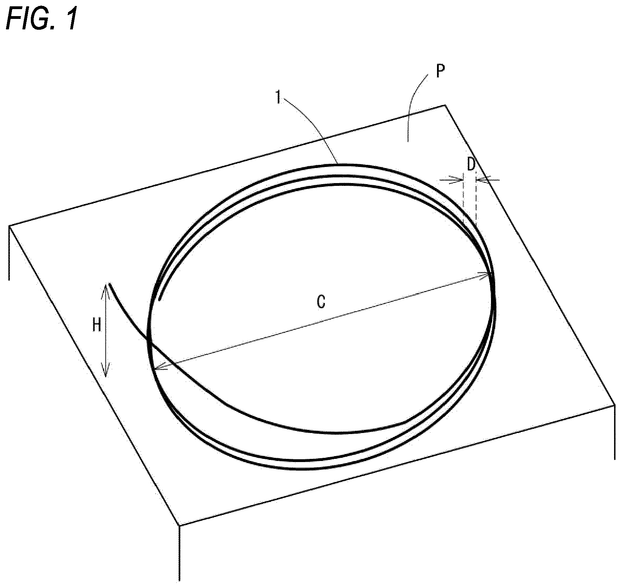

Next, properties of the welding wire according to the present embodiment will be described. The properties of the welding wire are defined by the cast (free ring diameter) and the helix. The cast and the helix are as defined by JIS Z 3001-7:2018, and as shown in FIG. 1, in the case where a welding wire 1 is cut into two or three turns and placed on a plane P without being restricted, the cast indicates a diameter C of a ring of the expanded welding wire 1. The helix refers to a maximum rising distance H of the welding wire 1 from the plane P in the case where the welding wire 1 is cut into two or three turns and placed on the plane P without being restricted. In the case where the welding wire is spirally wound, two or three turns of the winding structure may be cut and the restriction which holds the winding structure may be released to measure the cast and the helix. In the case where the welding wire is not spirally wound but is held linearly, the cast may be regarded as infinite, and the helix may be measured as the maximum value of the rising distance of the linear welding wire from the plane.

In the welding wire according to the present embodiment, the cast is 300 mm or more. The helix is 20.0 mm or less. As the cast is larger and as the helix is smaller, it indicates that the welding wire is more likely to return to the linearly extending shape at the time of releasing the restriction, from the restricted state such as the shape of being spirally wound up and held. That is, it indicates that the wire habit hardly occurs and the wire habit once generated is easily eliminated. In the welding wire according to the present embodiment, the cast is 300 mm or more and the helix is 20.0 mm or less, so that it is possible to effectively reduce the influence of the wire habit in welding.

The cast of the welding wire is preferably 320 mm or more, more preferably 400 mm or more. No particular upper limit is provided for the cast of the welding wire. The cast of the welding wire is determined by the material constituting the welding wire, the diameter and the pitch of the spiral shape around which the welding wire is wound up, the magnitude of the pressure applied in a bending direction of the welding wire at the time of winding up the welding wire, and the like. The larger the diameter and the pitch of the spiral shape of the winding, the smaller the applied pressure, and the larger the cast.

The helix of the welding wire is preferably 10.0 mm or less, more preferably 5.0 mm or less. Since it is preferable that the helix is smaller, no lower limit is provided, and it is particularly desirable that the helix is 0 mm. The helix of the welding wire is also determined by the material constituting the welding wire, the pitch of the spiral shape around which the welding wire is wound up, the magnitude of the pressure applied in the bending direction of the welding wire at the time of winding up the welding wire, and the like. The larger the diameter and the pitch of the spiral shape, the smaller the applied pressure, and the smaller the helix.

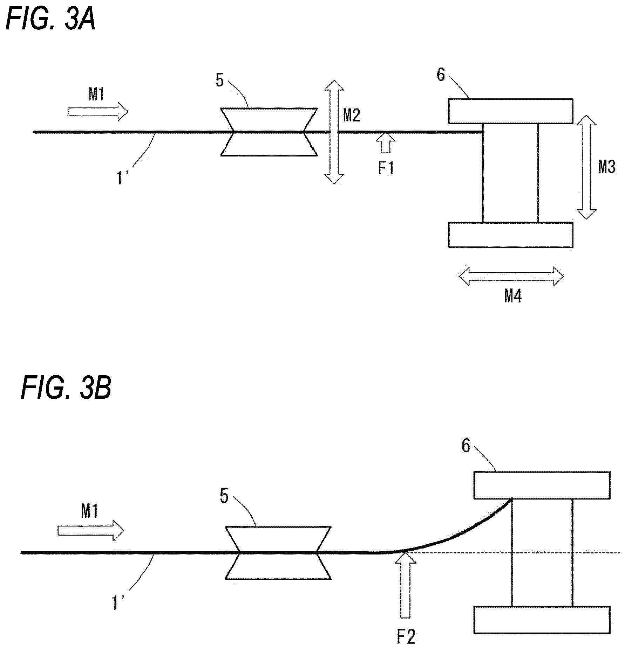

As described above, the helix and the cast of the welding wire, particularly the helix, depend on the magnitude of the pressure applied at the time of winding up the welding wire. For example, at the time of spirally winding the welding wire around a spool or the like, it depends on a load applied to the welding wire. At the time of winding the welding wire around the spool, in the related art, a welding wire 1' before winding is wound around a spool 6 via a guide roller (V-shaped roller) 5 while being linearly supplied (movement M1), as shown in FIG. 3B. During this time, the spool 6 is axially rotated without moving positions of the roller 5 and the spool 6, thereby winding up the welding wire 1'. It is required to wind the welding wire 1' uniformly along an axis of the spool 6, and for this purpose, the welding wire 1' is wound up while applying a load F2 to the welding wire 1' along an axial direction of the spool 6. By adjusting the load F2, the welding wire 1' can be wound in order from an end along the axis of the spool 6. In this case, since it is necessary to apply a relatively large load F2 to the welding wire 1', a large wire habit is applied to the welding wire 1' by the load F2, and the helix becomes large.

On the other hand, as shown in FIG. 3A, when the welding wire is wound up while sliding the spool and/or the guide roller, the helix of the welding wire is easily reduced to a small value of 20.0 mm or less. In the mode shown in FIG. 3A, at the time of winding the welding wire 1' around the spool 6 via the roller 5 while feeding the welding wire 1' (movement M1), the roller 5 is slid in a left-right direction with respect to a feeding direction of the welding wire 1', that is, along the axial direction of the spool 6 (movement M2) while axially rotating the spool 6. In addition to or instead of the slide movement M2 of the roller 5 in the left-right direction, the spool 6 may be slid in the left-right direction with respect to the feeding direction of the welding wire 1' (movement M3). FIG. 3A shows a state where the spool 6 is slid to a left side (lower side in a plane of the drawing) toward an upstream side in the feeding direction of the welding wire 1'. Alternatively, the spool 6 may also be slid in a front-rear direction with respect to the feeding direction of the welding wire 1' (movement M4).

In the mode of FIG. 3A, since the welding wire 1' can be wound at each position of the spool 6 in the axial direction by the slide movements M2 and M3 of the roller 5 and/or the spool 6 in the left-right direction, it is not necessary to apply a large load to the welding wire 1' in order to achieve uniformity of winding in the axial direction. Only a small load F1 may be applied to the welding wire 1' along the axial direction of the spool 6. Alternatively, it is not necessary to apply such a load F1. The sliding movement M4 of the spool 6 in the front-rear direction also assists the winding of the welding wire 1' on the spool 6, and contributes to reducing the load F1.

Further, the deviation amount in the welding wire is preferably reduced to 15 mm or less from the viewpoint of reducing the influence of the wire habit. Here, as shown in FIG. 1, the deviation amount of the welding wire is defined as an amount D indicating how much each turn of winding is deviated from an arrangement based on a concentric circle in the case where the welding wire 1 is cut in two or three turns and placed on the plane P without being restricted. The smaller the deviation amount is, the more the turns are aligned. In the case where the cast is 300 mm or more and the helix is 20.0 mm or less, the deviation amount is easily reduced to 15 mm or less. The wire diameter of the welding wire has little influence on the wire habit. In particular, in the case where the wire diameter of the welding wire is in the range of 0.4 mm or more and 4.2 mm or less exemplified above, the influence on the wire habit is limited.

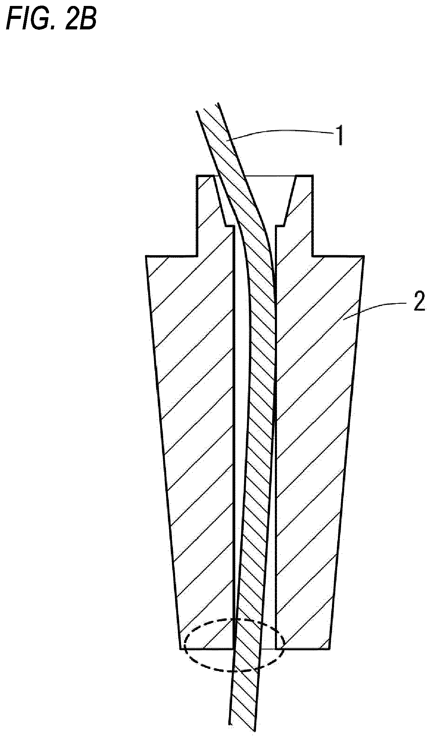

Here, the influence of the wire habit of the welding wire on the welding will be specifically described. In the case where the welding wire has a strong wire habit, the welding wire may be fed from the feeding device to the welding tip at the tip of the welding torch while having the wire habit. FIG. 2B shows a state where the welding wire 1 having a wire habit is introduced into the welding tip 2. In the case where welding is performed in a state where the welding wire is thus curved, a target positional accuracy is lowered because the welding wire has a wire habit and is curved. That is, a droplet from the welding wire does not land, with high accuracy, on a point where welding is to be performed immediately below the welding tip. In addition, in the case where the welding wire is slid or heated in a state where the welding wire is strongly pressed against a portion in contact with the welding wire as indicated by a portion surrounded by a broken line in the drawing, such as an inner wall surface of the welding tip, the welding wire is more likely to be caught (interference for smooth feeding) or the welding tip is more likely to be worn due to friction or fusion. In the case where the wear of the welding tip progresses, the inner diameter of the welding tip varies, and an electric conduction point with the welding wire varies, so that welding conditions may become unstable. The catching of the welding wire and the wear of the member due to the wire habit may occur not only in the welding tip but also in other members constituting the welding device, such as a conduit cable that connects the feeding device and the welding torch and the inside of the welding torch, and this phenomenon may also hinder the smooth progress of welding. In particular, in a case of performing wire feeding control welding in which welding is performed while repeating forward feeding and backward feeding of a wire, wear of a device constituent member such as a welding tip easily occurs. In addition, in the additive manufacturing in which the welding is performed in multiple layers and the welding takes a long period of time, a decrease in target positional accuracy and damage to the welding tip are likely to become a problem.

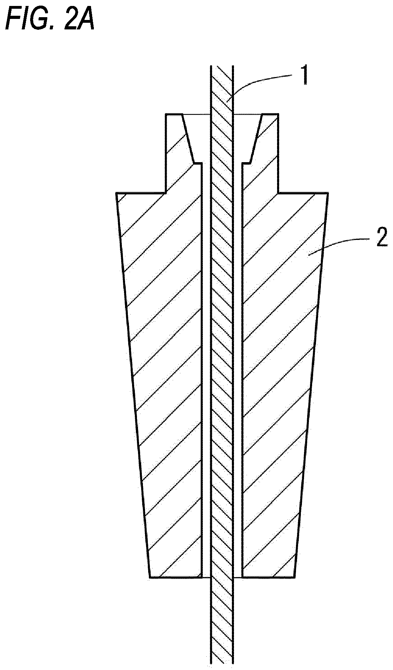

On the other hand, in the case of using a welding wire in which the wire habit is small or in which the wire habit is easily eliminated, such as the welding wire according to the present embodiment, the wire habit is easily eliminated or relaxed in the welding wire 1, and the welding wire 1 is extended to a linear shape or a state close thereto and introduced into the welding tip 2, as shown in FIG. 2A. Thus, the target positional accuracy of the welding is increased. Further, the welding wire is less likely to come into contact with the inner wall surface of the welding tip, and even when the welding wire comes into contact with the inner wall surface, the welding wire is less likely to be pressed against the inner wall surface with a strong force. Therefore, strong friction and fusion are less likely to occur between the welding wire and the welding tip, and the welding wire is less likely to be caught and the welding tip is less likely to be worn. Thus, the welding can be performed under stable conditions. Similarly, even in a device constituent member other than the welding tip, such as in a conduit cable or a welding torch, the welding wire is less likely to be caught and the member is less likely to be worn. In this way, the wire habit of the welding wire can be reduced, thereby improving the target positional accuracy and reducing the influence on the welding device such as wear of the welding tip. In particular, in a case of performing wire feeding control or in a case of performing additive manufacturing, the effect of reducing the influence of the wire habit is improved. Further, in the case where the welding wire includes the Cu coating layer on the surface thereof, the effect of improving the feeding performance of the welding wire by reducing the wire habit is further improved by the Cu coating layer.

The degree of the wire habit of the welding wire can be evaluated by the deviation amount of the tip of the welding wire at the time of feeding the welding wire. Specifically, during feeding of the welding wire in a predetermined feeding direction via the welding torch, the deviation amount of the position through which the center of the tip of the welding wire passes may be evaluated in both of two directions (X direction and Y direction) orthogonal to each other set in a plane orthogonal to the feeding direction. More specifically, similar to the evaluation on the target positional accuracy in the following example, the welding wire is fed to the welding torch using the wire feeding device, and how much the position of the tip of the welding wire deviates from a target position during feeding may be measured. At this time, for example, the welding torch to which the welding tip is attached is held with the tip of the welding torch directed downward, and a laser displacement meter is set at a position below the tip of the welding tip (for example, 100 mm below the tip of the welding tip). Then, the position (coordinates in a horizontal plane) through which the tip of a wire diameter central portion of the welding wire passes may be measured by a laser displacement meter while feeding the welding wire downward, and the deviation amounts in the X direction and the Y direction orthogonal to each other may be evaluated. Although detailed measurement conditions are not particularly specified, a mode in which a feeding speed of the welding wire is set to 10 m/min, a cycle of performing one measurement every time the welding wire is fed by 40 mm is repeated 100 times, and the deviation amount during 100 cycles is evaluated can be exemplified.

In the welding wire according to the present embodiment, as described above, since the wire habit hardly occurs and the wire habit once generated is easily eliminated, the deviation amount evaluated as the positional deviation of the tip of the welding wire at the time of feeding is reduced to be small. In particular, the deviation amount is reduced to be small by the effect of reducing the helix of the welding wire to 20.0 mm or less. The deviation amount of the welding wire is preferably less than ±3 mm in both the X direction and the Y direction, more preferably less than ±1.5 mm.

### EXAMPLES

Hereinafter, the present invention will be described more specifically with reference to Examples. Here, a relationship among a wire habit of a welding wire, a target positional accuracy during welding, and tip wear was evaluated. Hereinafter, unless otherwise specified, various tests are performed at room temperature in the atmosphere.

### [Preparation of Sample]

Welding wires each including one of the following four metal types were produced. Specifically, the solid wires each having the predetermined component compositions were each drawn to predetermined wire diameter shown in Table 1. For some of the samples, a base layer formed of Ni and a coating layer formed of Cu were formed on the wire before drawing the wire. After drawing the wire, a thickness of the coating layer was set to 1.5 µm. Each of the welding wires thus manufactured was spirally wound around a spool to be restricted as a sample according to each of Examples and Comparative Examples. The winding of the welding wire was performed by either a method (manufacturing method 1) in which the spool was not slid and the roller was slid in a left-right direction in FIG. 3A or a method (manufacturing method 2) in which the spool and the roller were not slid as shown in FIG. 3B. At the time of winding up the welding wire including the same material, the wire habit was changed by selecting the manufacturing method 1 or the manufacturing method 2 and changing the magnitude of the pressure applied in a bending direction of the welding wire.

The composition of the metal type constituting the welding wire was as follows.

Two-phase SUS: Cr: 22 mass%, Ni: 5 mass%, Mo: 3 mass%, N: 0.2 mass%, C: 0.02 mass%, with the balance being Fe and unavoidable impurities.

Ni-based alloy: Cr: 30 mass%, Fe: 5 mass%, Al: 3 mass%, Nb: 1.5 mass%, the balance being Ni and unavoidable impurities.

SUS (not two-phase SUS): Cr: 17 mass%, Si: 0.4 mass%, Mo: 0.3 mass%, Nb: 0.5 mass%, with the balance being Fe and unavoidable impurities.

Tool steel: Cr: 5 mass%, Mo: 1 mass%, C: 0.2 mass%, with the balance being Fe and unavoidable impurities.

### [Test Method]

### <Measurement on Tensile Strength>

A tensile strength of the welding wire of each sample was measured by a tensile test in accordance with JIS Z 2241:2011.

### <Evaluation on Wire habit>

The cast and the helix of the welding wire of each sample were measured in accordance with the definition of JIS Z 3001-7:2018. That is, as shown in FIG. 1, the welding wire was cut into three turns and placed on a plane with the restriction released. At this time, the diameter C of the ring of the expanded wire was measured as the cast, and the maximum rising distance H of the wire from the plane was measured as the helix.

Further, the degree of uniformity between turns of the welding wire was evaluated by the deviation amount. That is, the deviation amount D between the turns of the winding was measured from an arrangement based on a concentric circle in a state where the welding wire was cut by three turns and placed on a plane with the restriction released as described above. A case where the deviation amount was more than 15 mm was evaluated as poor uniformity (C), and a case where the deviation amount was 15 mm or less was evaluated as good uniformity (A). The wire habit is not corrected at the time of performing each evaluation on the wire habit described here and evaluation on target positional accuracy and tip wear described below.

### <Evaluation on Target Positional Accuracy>

The welding wire of each sample was fed to the fixed welding torch using a wire feeding device, and how much the position of the tip of the welding wire deviated from the target position was measured. The welding torch to which the welding tip was attached was held with the tip of the welding torch directed downward, and a laser displacement meter was set at a position 100 mm below the tip of the welding tip. Then, while feeding the welding wire downward (feeding speed: 10 m/min), the position (coordinates in the horizontal plane) through which the tip of the wire diameter central portion of the welding wire passed was measured by the laser displacement meter. A cycle in which one measurement was performed every time the welding wire was fed by 40 mm was repeated 100 times, and the deviation amount in an X direction and a Y direction orthogonal to each other set in a horizontal plane was measured in each cycle. In the case where a deviation of ±3 mm or more occurred in at least one of the X direction and the Y direction during 100 cycles, the target positional accuracy was evaluated as low (C). On the other hand, in the case where the deviation was less than ±3 mm in both the X direction and the Y direction but was ±1.5 mm or more in at least one direction, the target positional accuracy was evaluated as high (A). Further, in the case where the deviation was less than ±1.5 mm in both the X direction and the Y direction, the target positional accuracy was evaluated as very high (AA).

### <Evaluation on Tip Wear>

A wear amount of the welding tip at the time of performing welding using the welding wire of each sample was measured. The welding was performed as an additive manufacturing step using arc welding by a Cold Metal Transfer (CMT) process. At this time, a step of forming a linear welding layer having a length of 200 mm was repeated at a torch scanning speed of 200 cm/min to form 100 welding layers in a vertically stacked manner. A wire feeding speed was 7 m/min. Arc time was about 600 seconds.

After the additive manufacturing of 100 layers was performed, the welding tip was removed, and the tip wear was evaluated based on an area ratio of a tip hole. A case where the wear amount was 30% or more based on a tip hole area before additive manufacturing was evaluated as large tip wear (C). On the other hand, a case where the wear amount was less than 30% was evaluated as small tip wear (A). Further, a case where the wear amount was less than 15% was evaluated as particularly small tip wear (AA). The wear amount of the tip hole affects variation of an electric conduction point of the tip, and may become a reason why an electrical resistance value varies and arc instability during welding is caused in the case where the wear amount is 30% or more. On the other hand, in the case where the wear amount is reduced to less than 30%, such a phenomenon hardly occurs.

### [Test Results]

The following Table 1 shows results of the above evaluations with respect to the welding wires according to Examples 1 to 9 and Comparative Examples 1 to 9, together with a metal type, a wire diameter, presence or absence of a Cu coating layer, and a winding method of the welding wire. In the table, regarding the cast, "∞" indicates a state of being stretched straight.

**Table 1**

| | Metal type | Wire diameter [mm] | Cu coating layer | Welding wire winding method | Tensile strength [MPa] | Wire habit | | | Target positional accuracy | Tip wear |
|---|---|---|---|---|---|---|---|---|---|---|
| | | | | | | Cast [mm] | Helix [mm] | Uniformity | | |
| Example 1 | Ni-based alloy | 1.2 | Absence | Method 1 | 1,058 | ∞ | 1 | A | AA | A |
| Example 2 | Two-phase SUS | 1.2 | Absence | Method 1 | 1,160 | 422 | 1 | A | AA | A |
| Example 3 | SUS | 1.2 | Absence | Method 1 | 1,177 | 398 | 1 | A | AA | A |
| Example 4 | Tool steel | 1.2 | Absence | Method 1 | 834 | 364 | 7 | A | AA | A |
| Example 5 | Ni-based alloy | 1.2 | Presence | Method 1 | 1,060 | 323 | 15 | A | A | AA |
| Example 6 | Two-phase SUS | 1.2 | Presence | Method 1 | 1,250 | 412 | 1 | A | AA | AA |
| Example 7 | SUS | 1.2 | Presence | Method 1 | 1,168 | 370 | 1 | A | AA | AA |
| Example 8 | Tool steel | 1.2 | Presence | Method 1 | 828 | 334 | 14 | A | A | AA |
| Example 9 | Ni-based alloy | 1.6 | Absence | Method 1 | 1,240 | 432 | 19 | A | A | A |
| Comparative example 1 | Ni-based alloy | 1.2 | Absence | Method 2 | 1,063 | 279 | 21 | C | C | C |
| Comparative example 2 | Two-phase SUS | 1.2 | Absence | Method 1 | 1,160 | 280 | 6 | C | C | C |
| Comparative example 3 | SUS | 1.2 | Absence | Method 1 | 1,157 | 268 | 18 | C | C | C |
| Comparative example 4 | Tool steel | 1.2 | Absence | Method 2 | 849 | 279 | 26 | C | C | C |
| Comparative example 5 | Ni-based alloy | 1.2 | Presence | Method 1 | 1,060 | 291 | 15 | C | C | A |
| Comparative example 6 | Two-phase SUS | 1.2 | Presence | Method 2 | 1,213 | 583 | 23 | C | C | A |
| Comparative example 7 | SUS | 1.2 | Presence | Method 1 | 1,153 | 277 | 14 | C | C | A |
| Comparative example 8 | Tool steel | 1.2 | Presence | Method 2 | 817 | 288 | 27 | C | C | A |
| Comparative example 9 | Ni-based alloy | 1.6 | Absence | Method 2 | 1,237 | 295 | 163 | C | C | C |

According to Table 1, in all of the welding wires according to Examples 1 to 9, the cast is 300 mm or more and the helix is 20.0 mm or less. Correspondingly, it is confirmed that in any of the welding wires according to Examples 1 to 9, good uniformity is obtained (A), and the wire habit is small. Further, in Examples 1 to 9, the evaluation result of the target positional accuracy is high (A) or very high (AA), and the evaluation result of the tip wear is small (A) or very small (AA). In particular, in each example in which the helix is as small as 1 mm, a very high target positional accuracy is obtained (AA).

On the other hand, it is confirmed that in the welding wires according to Comparative Examples 1 to 9, at least one of the cast of less than 300 mm and the helix of more than 20.0 mm is exhibited. Correspondingly, in all of Comparative Examples 1 to 9, the uniformity of the welding wire is deteriorated (C). Further, in all of Comparative Examples 1 to 9, the target positional accuracy is low (C). In Comparative Examples 1 to 4 and 9, the tip wear is also large (C). In Comparative Examples 5 to 8, the evaluation result that the tip wear is small (A) is obtained, but the tip wear is large compared to Examples 5 to 8 using the same type of wire.

As described above, from the comparison between Examples and Comparative Examples, it is understood that even in the case of a high-strength welding wire having a tensile strength of 800 MPa or more, when the cast is 300 mm or more and the helix is 20.0 mm or less, the wire habit is reduced to be small, and the effect of improving the target positional accuracy at the time of welding and reducing the tip wear is exerted. On the other hand, in the case where at least one of the cast and the helix does not satisfy the above range, the influence of the wire habit becomes large, and at least the target positional accuracy deteriorates. Further, the tip wear also easily progresses.

Next, the examples are compared with one another. Although the metal type constituting the welding wire is different among Examples 1 to 4 and among Examples 5 to 8, the evaluation result of "A" or better is obtained in each evaluation on the target positional accuracy and the tip wear regardless of the difference in the metal type. That is, it is understood that regardless of the specific type of the welding wire, when the cast is 300 mm or more and the helix is 20.0 mm or less, a high effect can be exerted in improving the target positional accuracy and reducing the tip wear.

Examples 1 to 4 are different from Examples 5 to 8 in the presence or absence of the Cu coating layer. In comparison, in Examples 1 to 4 in which the Cu coating layer was not provided, the tip wear remained in the evaluation result of being small (A), whereas in Examples 5 to 8 in which the Cu coating layer was provided, the tip wear was obtained as being very small (AA). Accordingly, it is understood that the effect of reducing the wear of the welding tip by the welding wire is improved by providing the Cu coating layer. This is considered to be because the Cu coating layer improves the feeding performance of the welding wire.

Finally, Example 1 and Example 9 differ from each other in the wire diameter of the welding wire. However, in each evaluation on the target positional accuracy and the tip wear, an evaluation result of a level of "A" or better is obtained. Accordingly, it is understood that as long as the cast is 300 mm or more and the helix is 20.0 mm or less, a high effect can be exerted in improving the target positional accuracy and reducing the tip wear regardless of the wire diameter of the welding wire.

The embodiments of the present invention have been described above. The present invention is not particularly limited to these embodiments, and various modifications may be made.

The present application is based on Japanese Patent Applications No. 2022-110142 filed on July 8, 2022 and No. 2023-046594 filed on March 23, 2023, and the contents thereof are incorporated herein by reference.

## Claims

1. A welding wire (1) comprising a solid wire of metal that has a tensile strength of 800 MPa or more, wherein the welding wire (1) has a cast (C) of 300 mm or more and a helix (H) of 20.0 mm or less.

2. The welding wire (1) according to claim 1, comprising a coating layer comprising Cu, a Cu-based alloy or a Cu alloy on an outer periphery of the solid wire.

3. The welding wire (1) according to claim 1 or 2, wherein
the solid wire is formed of a Ni-based alloy, a stainless steel, or a tool steel.

4. The welding wire (1) according to any one of claims 1 to 3, having a wire diameter of 0.4 mm or more and 4.2 mm or less.

5. The welding wire (1) according to any one of claims 1 to 4, wherein
during feeding of the welding wire in a feeding direction via a welding torch, a deviation amount of a position through which a center of a tip of the welding wire (1) passes is less than ±3 mm in both of two directions orthogonal to each other set in a plane orthogonal to the feeding direction.

6. Use of the welding wire (1) according to any one of claims 1 to 5 for welding, wherein during feeding of the welding wire (1) in a feeding direction via a welding torch, a deviation amount of a position through which a center of a tip of the welding wire (1) passes is less than ±3 mm in both of two directions orthogonal to each other set in a plane orthogonal to the feeding direction.

7. The use according to claim 6, wherein the welding is gas-shield welding such as Metal Inert Gas, MIG, welding or Metal Active Gas, MAG, welding.

8. The use according to claim 6 or 7, wherein the welding is for additive manufacturing.

9. The use according to one of claims 6 to 8, wherein the welding wire (1) is continuously fed from a feeding device to a welding torch for welding.
